# EUROPEAN PATENT APPLICATION

(11) **EP 2 628 812 A1**
(43) Date of publication of application: **21.08.2013**
(21) Application number: 13154884.4
(22) Date of filing: 12.02.2013
(51) Int. Cl.: C22C 19/03, C22F 1/10

(54) **Hydrogen storage alloy, electrode, nickel-metal hydride rechargeable battery and method for producing hydrogen storage alloy**

(30) Priority: 20.02.2012 JP 2012034227; 07.12.2012 JP 2012268799; 07.12.2012 JP 2012268800
(71) Applicant: GS Yuasa International Ltd., Kisshoin Minami-ku, Kyoto-shi Kyoto 601-8520 (JP)
(72) Inventor: Kanemoto, Manabu, Kyoto-shi, Kyoto 601-8520 (JP); Okuda, Daisuke, Kyoto-shi, Kyoto 601-8520 (JP); Kodama, Mitsuhiro, Kyoto-shi, Kyoto 601-8520 (JP)
(74) Representative: Isarpatent

(57) **Abstract**

A hydrogen storage alloy with at least two phases containing La, Ni, and Y or a heavy rare earth element, including a first phase having a composition represented by the general formula R1ₐR2_{b}R3_{c}Ni_{d}R4ₑ (wherein R1 is at least one element essentially containing La, R2 is at least one element selected from the group consisting of Y and a heavy rare earth element, R3 is Ca and/or Mg, R4 is at least one element selected from the group consisting of Co, Mn and Al, and a, b, c, d and e are numerical values that satisfy the numerical expressions a + b + c = 1, 0 ≤ b ≤ 0.3, 0 ≤ c ≤ 0.4, 3.0 < d + e < 4.0, and 0 ≤ e ≤ 1) and a second phase having a higher concentration of Y or a heavy rare earth element than that of the first phase, and is dispersed in the first phase.

## Description

### BACKGROUND OF THE INVENTION

### 1. Field of the Invention

The present invention relates to a hydrogen storage alloy which is excellent in corrosion resistance, an electrode and a nickel-metal hydride rechargeable battery which are prepared therefrom, and a method for producing the hydrogen storage alloy.

### 2. Description of the Related Art

The hydrogen storage alloy is capable of storing hydrogen safely and readily and is a material expected to be a clean energy source, and has been attracting attention as a new material for energy storage and energy conversion.

Such an application field of the hydrogen storage alloy covers a wide range including storage and transportation of hydrogen, storage and transportation of heat, heat-mechanical energy conversion, separation and purification of hydrogen, separation of hydrogen isotopes, a nickel-metal hydride rechargeable battery, catalysts for synthetic chemistry, and a temperature sensor. Of these, there has been an increase in demand for a nickel-metal hydride rechargeable battery incorporating the hydrogen storage alloy as a negative electrode active material since it has advantages such as the properties of being small in size, being light in weight and having high output.

As a negative electrode active material for a nickel-metal hydride rechargeable battery, heretofore, the AB₅-type alloy mainly composed of rare earth elements and Ni has been used. However, there is a problem that when the battery is stored under a high temperature environment or when the battery is charged and discharged repeatedly, such a hydrogen storage alloy is apt to corrode, a hydroxide of the rare earth element and the like are formed on the surface thereof due to corrosion, and the shape thereof is deformed.

For this reason, in order to attain a long life nickel-metal hydride rechargeable battery, it is important to allow the corrosion resistance of the hydrogen storage alloy to be enhanced. As a method of enhancing the corrosion resistance of the hydrogen storage alloy, allowing Y (yttrium) to be contained in the negative electrode has been proposed (see JP-A-6-215765 and JP-A-2001-307721). However, these methods have failed to allow the corrosion resistance of the hydrogen storage alloy to be sufficiently enhanced.

### SUMMARY OF THE INVENTION

Thus, in view of these circumstances, the present invention has been contemplated in order to provide a hydrogen storage alloy which is excellent in corrosion resistance, an electrode and a nickel-metal hydride rechargeable battery which are prepared therefrom, and a method for producing the hydrogen storage alloy.

The present inventors have found that instead of allowing Y to be uniformly distributed throughout the hydrogen storage alloy, by allowing Y to be segregated, it is made possible to inhibit Y from forming a stable compound with La or Ni. On this occasion, a film of yttrium hydroxide (Y(OH)₃) was apt to be formed, and the corrosion resistance of the hydrogen storage alloy has been dramatically enhanced successfully. In general, for an alloy, the segregation is believed to lead to the decline in performance and is considered to be undesirable. The present invention has been completed based on of such new findings.

That is, the hydrogen storage alloy according to the present invention is a hydrogen storage alloy with at least two phases containing La, Ni, and Y or a heavy rare earth element including a first phase having a composition represented by the general formula R1ₐR2_{b}R3_{c}Ni_{d}R4ₑ (wherein R1 is at least one element essentially containing La, R2 is at least one element selected from the group consisting of Y and a heavy rare earth element, R3 is Ca and/or Mg, R4 is at least one element selected from the group consisting of Co, Mn and Al, and a, b, c, d and e are numerical values that satisfy the numerical expressions a + b + c = 1,0 ≤ b ≤ 0.3, 0 ≤ c ≤ 0.4, 3.0 < d + e < 4.0, and 0 ≤ e ≤ 1), and a second phase having a higher concentration of Y or a heavy rare earth element than that of the first phase, and is dispersed in the first phase. In this context, heavy rare earth elements (Gd, Tb, Dy, Ho, Er, Tm, Yb, Lu) have an ionic radius and an atomic radius close to those of Y, and the reaction order thereof is almost the same as that of Y, and therefore it is considered that these elements exert the same effect as that of Y.

Among these hydrogen storage alloys, preferred is an alloy with the second phase having a concentration of Ni which is not more than 0.02 times the concentration of Ni in the first phase.

Moreover, the hydrogen storage alloy according to the present invention is a hydrogen storage alloy with at least two phases containing La, Ni, and Y or a heavy rare earth element including a first phase having a composition represented by the general formula R1ₐR2_{b}Ni_{c}Co_{d}R3ₑ (wherein R1 is La and at least one element selected from the group consisting of a rare earth element exclusive of Y and a heavy rare earth element, Mg, Ca and Zr, R2 is at least one element selected from the group consisting of Y and a heavy rare earth element, R3 is at least one element selected from the group consisting of Mn, Al, Zn, Fe, Cu and Si, and a, b, c, d and e are numerical values that satisfy the numerical expressions 0 < b < 0.3, a + b = 1, 5.15 < c + d + e < 5.45, 0 ≤ d ≤ 1, and 0 ≤ e ≤ 1), and a second phase having a higher concentration of Y or a heavy rare earth element than that of the first phase and a concentration of Ni being not more than 0.02 times the concentration of Ni in the first phase, and is dispersed in the first phase. In this context, heavy rare earth elements (Gd, Tb, Dy, Ho, Er, Tm, Yb, Lu) have an ionic radius and an atomic radius close to those ofY, and the reaction order thereof is almost the same as that of Y, and therefore it is considered that these elements exert the same effect as that of Y.

It is preferred that with regard to the hydrogen storage alloy, R1 be La and Ce, R3 be Mn and/or Al, and c, d and e satisfy the numerical expressions 5.20 < c + d + e < 5.45 and 0 ≤ d ≤ 0.45.

An electrode containing a hydrogen storage alloy according to the present invention and a nickel-metal hydride rechargeable battery provided with the electrode as a negative electrode are also encompassed by the present invention.

Moreover, a method for producing a hydrogen storage alloy according to the present invention is also encompassed by the present invention. That is, the method for producing a hydrogen storage alloy according to the present invention is a method including the steps of allowing raw material metals to melt below the melting point temperature of Y or the heavy rare earth element employing a high frequency induction melting method to alloy the metals, cooling the resulting molten alloy, and subjecting the cooled alloy to a heat treatment at 900 to 1080°C.

### BRIEF DESCRIPTION OF THE DRAWINGS

The foregoing and other features of the invention will become apparent to one skilled in the art to which the present invention relates upon consideration of the invention with reference to the accompanying drawings, wherein:
Fig. 1 is a schematic view showing a main phase and a segregation phase in a cross section of the hydrogen storage alloy according to the present invention;
Fig. 2 shows photographs showing a cross section of a hydrogen storage alloy ingot obtained in Example 1 and taken through an EPMA; and
Fig. 3 shows photographs showing a cross section of a hydrogen storage alloy ingot obtained in Example 6 and taken through an EPMA.

### DETAILED DESCRIPTION OF THE INVENTION

Preferred embodiments of the present invention will be described hereinafter.

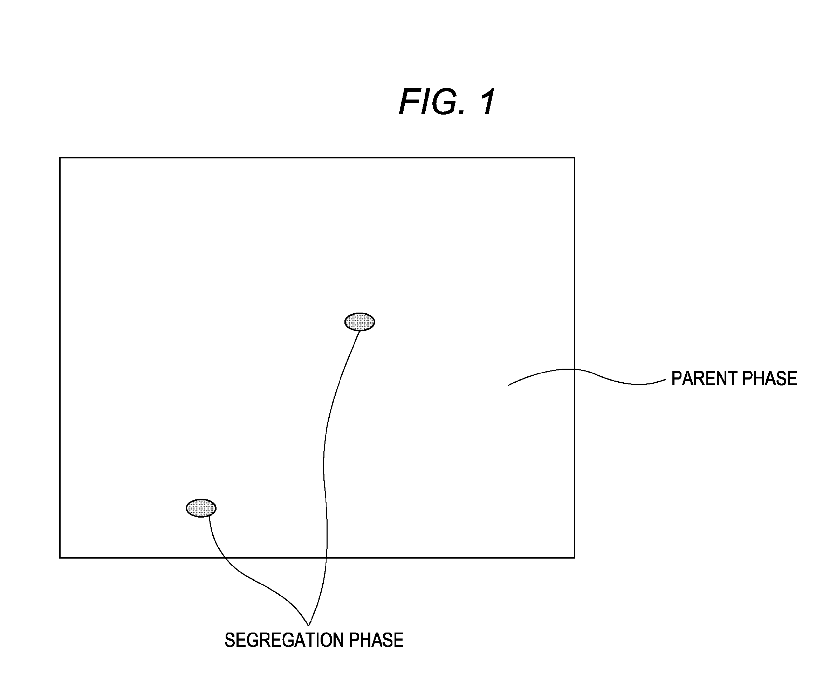

A hydrogen storage alloy according to a first aspect of the present invention is a hydrogen storage alloy with at least two phases containing La, Ni, and Y or a heavy rare earth element, and is a rare earth-Mg-Ni-type alloy with a segregation phase (second phase) having a higher concentration of Y or a heavy rare earth element than that of a main phase (first phase) and is dispersed in the main phase. In this connection, the rare earth-Mg-Ni-type hydrogen storage alloy is a hydrogen storage alloy having a crystal structure in which plural AB₅ units and A₂B₄ units are stacked up in the C-axis direction, and examples of the alloy include those having a crystal structure such as PuNi₃, Ce₂Ni₇, Pr₅Co₁₉, and Ce₅Co₁₉. The presence or absence of the segregation phase can be analyzed by using an EPMA (Electron Probe Micro Analyzer). In this connection, Fig. 1 is a schematic view showing the main phase and the segregation phase in a cross section of the hydrogen storage alloy. In the present invention, having the segregation phase (second phase) means to have a phase in which the proportion of its component elements in the alloy determined by an EPMA analysis is different from that of the main phase (first phase), and the segregation phase (second phase) is a phase other than the main phase.

Among these hydrogen storage alloys according to the present invention, an alloy with the segregation phase having a concentration of Ni which is lower than the concentration of Ni in the main phase is preferred, and for example, the concentration of Ni in the segregation phase is preferably not more than 0.02 times the concentration of Ni in the main phase, and more preferably 0.001 to 0.02 times.

A hydrogen storage alloy according to a second aspect of the present invention is a hydrogen storage alloy with at least two phases containing La, Ni, and Y or a heavy rare earth element, and is an AB₅-type hydrogen storage alloy with a segregation phase (second phase) having a higher concentration of Y or a heavy rare earth element than that of the main phase (first phase) and a concentration of Ni being not more than 0.02 times the concentration of Ni in the main phase, and is dispersed in the main phase. The presence or absence of the segregation phase can be analyzed by using an EPMA (Electron Probe Micro Analyzer). In this connection, Fig. 1 is a schematic view showing the main phase and the segregation phase in a cross section of the hydrogen storage alloy. In this connection, in the present invention, having the segregation phase (second phase) means to have a phase in which the proportion of its component elements in the alloy determined by an EPMA analysis is different from that of the main phase (first phase), and the segregation phase (second phase) is a phase other than the AB₅-type (CaCu₅-type) phase.

When a hydrogen storage alloy corrodes, since a hydroxide of the rare earth element and the like are formed on the surface thereof and the shape thereof is deformed, by measuring the specific surface area of the hydrogen storage alloy powder before and after the cycle test, the value can serve as an index for estimating the amount of the hydrogen storage alloy corroded. The specific surface area of the hydrogen storage alloy powder before and after the cycle test was measured by the present inventors, whereupon it has been found that the hydrogen storage alloy with a phase having the segregated Y has a small value of specific surface area compared to a homogenized hydrogen storage alloy, and enhanced corrosion resistance. It is thought that this is because when the hydrogen storage alloy with a phase having the segregated Y is brought into contact with an electrolytic solution which is an alkaline solution, the segregated Y is preferentially allowed to elute and a passication film of yttrium hydroxide is promptly formed over the alloy surface. On the other hand, it is thought that in the hydrogen storage alloy with a phase having the uniformly distributed Y, since Y forms a stable alloy with La or Ni, especially with Ni, a passication film of yttrium hydroxide is less apt to be formed. Moreover, it is thought that with regard to such behavior of Y, the same holds true for heavy rare earth elements (Gd, Tb, Dy, Ho, Er, Tm, Yb, Lu) having an ionic radius and an atomic radius close to those of Y and having almost the same reaction order as that of Y.

The concentration of Y or a heavy rare earth element in the segregation phase is preferably not less than twice the concentration of Y or a heavy rare earth element in the main phase, and more preferably 4 to 100 times.

The proportion of the segregation phase is preferably 0.05 to 2%, and more preferably 0.1 to 1%. When the proportion of the segregation phase is 0.05 to 2%, the passication film may be effectively formed over the alloy surface, and when the proportion of the segregation phase is 0.1 to 1%, the passication film may be more noticeably formed over the alloy surface and the corrosion of the hydrogen storage alloy may be inhibited. In this connection, the proportion of the segregation phase means the proportion of the segregation phase area relative to the main phase area within a predetermined region of the cross section including about the center of the alloy ingot or particle.

The size of the segregation phase is preferably not less than 1 µm, and more preferably not less than 5 µm. When the size of the segregation phase is not less than 1 µm, the passication film may be effectively formed over the alloy surface, and when the size of the segregation phase is not less than 5 µm, the passication film may be more noticeably formed over the alloy surface, and the corrosion of the hydrogen storage alloy may be inhibited. In this connection, the size of the segregation phase means the value obtained by measuring the long side and the short side of the segregation phase and calculating the average value.

The main phase of the hydrogen storage alloy of the first aspect according to the present invention has a composition represented by the general formula R1ₐR2_{b}R3_{c}Ni_{d}R4ₑ (wherein R1 is at least one element essentially containing La, R2 is at least one element selected from the group consisting ofY and a heavy rare earth element, R3 is Ca and/or Mg, R4 is at least one element selected from the group consisting of Co, Mn and Al, and a, b, c, d and e are numerical values that satisfy the numerical expressions a + b + c = 1, 0 ≤ b ≤ 0.3, 0 ≤ c ≤ 0.4, 3.0 ≤ d + e < 4.0, and 0 ≤ e ≤ 1). In this connection, as a matter of course, the hydrogen storage alloy is an alloy represented by the general formula, but it may contain elements that are not defined by the general formula, for example, as inevitable impurities. In this connection, R1 essentially contains La and may further contain at least one element selected from the group consisting of Pr, Nd and Sm.

The main phase of the hydrogen storage alloy of the second aspect according to the present invention has a composition represented by the general formula R1ₐR2_{b}Ni_{c}Co_{d}R3ₑ (wherein R1 is La and at least one element selected from the group consisting of a rare earth element exclusive of Y and a heavy rare earth element, Mg, Ca and Zr, R2 is at least one element selected from the group consisting of Y and a heavy rare earth element, R3 is at least one element selected from the group consisting of Mn, Al, Zn, Fe, Cu and Si, and a, b, c, d and e are numerical values that satisfy the numerical expressions 0 < b < 0.3, a + b = 1, 5.15 < c + d + e < 5.45, 0 ≤ d ≤ 1, and 0 ≤ e ≤ 1). In this connection, as a matter of course, the hydrogen storage alloy is an alloy represented by the general formula, but it may contain elements that are not defined by the general formula, for example, as inevitable impurities.

With regard to the main phase, in the general formula, it is preferred that R1 be La and Ce, R3 be Mn and/or Al, and c, d and e satisfy the numerical expressions 5.20 < c + d + e < 5.45 and 0 ≤ d ≤ 0.45. It is further preferred that c, d and e satisfy the numerical expressions 5.25 ≤ c + d + e ≤ 5.35 and 0 ≤ d ≤ 0.2.

Although the method for producing a hydrogen storage alloy according to the present invention is not particularly limited, for example, the following method may be employed. First, raw material metals weighed so that the resulting alloy has a desired composition are placed in a melting pot, and the raw material metals are allowed to melt completely by high frequency induction heating below the melting point of Y or a heavy rare earth element, for example, 1500°C or less and preferably 1450°C or less, under an inert gas atmosphere such as an argon gas atmosphere. When the melting temperature exceeds the melting point of Y or a heavy rare earth element, the homogenization thereof is apt to occur. In this connection, the lower limit of the melting temperature is not particularly limited as long as other raw material metals can be melted. Moreover, by placing a metal that has a low melting point in the melting pot, an alloy with a homogeneous main phase may be cast. Furthermore, since Mg and Ca that have a low melting point are apt to volatilize, it is preferred to place them last or to place an alloyed material thereof.

Then, the melted raw material metals are cooled at a rate of 10000°C/second or less, preferably 5 to 100°C/second, and more preferably 10 to 100°C/second, by the metal mold casting method, the melt spinning method, or the like to obtain an ingot. When the cooling rate is within the range, the segregation of Y or a heavy rare earth element is apt to occur.

Furthermore, by subjecting the resulting ingot to a heat treatment at 900 to 1080°C, preferably 940 to 1050°C, it is made possible to obtain the hydrogen storage alloy according to the present invention. When the heat treatment temperature is within the range, the main phase is apt to be homogenized.

The use of the hydrogen storage alloy according to the present invention is not particularly limited, and it may be applied to various uses including a nickel-metal hydride rechargeable battery, a fuel cell, a fuel tank for a hydrogen automobile, and the like. Of these, the alloy is suitably used in a negative electrode active material for a nickel-metal hydride rechargeable battery. The nickel-metal hydride rechargeable battery provided with a negative electrode containing a hydrogen storage alloy according to the present invention in this way is also encompassed by the present invention.

For example, in addition to a negative electrode containing a hydrogen storage alloy according to the present invention as a negative electrode active material, a nickel-metal hydride rechargeable battery according to the present invention is further provided with a positive electrode (nickel electrode) containing a positive electrode active material composed mainly of nickel hydroxide, a separator, an alkaline electrolytic solution, and the like.

In the negative electrode is blended a hydrogen storage alloy according to the present invention as a negative electrode active material. For example, the hydrogen storage alloy according to the present invention is blended into the negative electrode as a pulverized hydrogen storage alloy powder.

The average particle diameter of the hydrogen storage alloy powder is preferably 20 to 100 µm and more preferably 40 to 70 µm. When the average particle diameter is less than 20 µm, the activation of the alloy becomes insufficient, and on the other hand, when the average particle diameter exceeds 100 µm, the productivity may be decreased. For example, the hydrogen storage alloy powder may be obtained by pulverizing the hydrogen storage alloy according to the present invention with a machine in the presence of an inert gas.

In addition to the hydrogen storage alloy powder, the negative electrode may contain a conductive agent, a binder (including a thickening agent) and the like.

Examples of the conductive agent include carbonaceous conductive agents such as natural graphite (flake graphite, flaky graphite, earthy graphite and the like), synthetic graphite, carbon black, acetylene black, ketjen black, carbon whiskers, carbon fibers and vapor-grown carbon; metallic conductive agents composed of powders and fibers of metals such as nickel, cobalt and copper; and yttrium oxide. These conductive agents may be used alone or in combination of two or more thereof. Moreover, the conductive agent may contain a rare earth oxide such as yttrium oxide as an anticorrosive agent.

The amount of the conductive agent blended is preferably 0.1 to 10 parts by mass and more preferably 0.2 to 5 parts by mass relative to 100 parts by mass of the hydrogen storage alloy powder. When the amount of the conductive agent blended is less than 0.1 part by mass, it is difficult to attain sufficient conductivity, and on the other hand, when the amount of the conductive agent blended exceeds 10 parts by mass, the effect of enhancing the discharge capacity may become insufficient.

Examples of the binder include polytetrafluoroethylene (PTFE), polyolefin resins such as polyethylene and polypropylene, ethylene-propylene-diene rubber (EPDM), sulfonated EPDM, styrene-butadiene rubber (SBR), fluororubber, polyvinyl alcohol, methyl cellulose, carboxymethyl cellulose and xanthan gum. These binders may be used alone or in combination of two or more thereof.

The amount of the binder blended is preferably 0.1 to 1.0 part by mass and more preferably 0.5 to 1.0 part by mass relative to 100 parts by mass of the hydrogen storage alloy powder. When the amount of the binder blended is less than 0.1 part by mass, a sufficient increase in viscosity is less apt to be attained, and on the other hand, when the amount of the binder blended exceeds 1.0 part by mass, the performance of the electrode may be decreased.

Examples of the positive electrode include an electrode which is blended, as a positive electrode active material, with a nickel hydroxide composite oxide prepared by mixing nickel hydroxide as a main component, zinc hydroxide and cobalt hydroxide. As the nickel hydroxide composite oxide, a material uniformly dispersed by the coprecipitation method is suitably used.

It is preferred that the positive electrode contain an additive agent for improving the electrode performance in addition to the nickel hydroxide composite oxides. Examples of the additive agent include conductivity modifiers such as cobalt hydroxide and cobalt oxide, and may also include nickel hydroxide composite oxides coated with cobalt hydroxide, and nickel hydroxide composite oxides prepared by allowing a portion thereof to be oxidized with oxygen or an oxygen-containing gas, K₂S₂O₈, hypochlorous acid and the like.

As the additive agent, a compound containing a rare earth element such as Y and Yb, and a material capable of enhancing the oxygen overpotential such as a compound containing Ca may be used. Since a portion of the rare earth element such as Y and Yb dissolves and is arranged over the negative electrode surface, the effect of inhibiting the corrosion of the negative electrode active material is also expected.

As in the case of the negative electrode, the positive electrode may further contain the conductive agent, the binder and the like described above.

Such a positive electrode and a negative electrode may be produced by adding the conductive agent, the binder and the like to each active material if necessary, then allowing the mixture to be mixed with water or an organic solvent such as alcohol and toluene, applying the resulting paste to a conductive support, and after drying, roll forming and shaping them, for example.

Examples of the conductive support include a steel sheet and a plated steel sheet prepared by subjecting a steel sheet to plating with metallic materials such as nickel. With regard to the shape of the conductive support, a foam, a compact of a bunch of fibers and a three-dimensional substrate subjected to concavo-convex processing; and a two-dimensional substrate such as a perforated plate are enumerated as specific examples thereof. Among these conductive supports, as the support for the positive electrode, preferred is a foam composed of nickel excellent in corrosion resistance against alkaline materials and oxidation resistance and having a porous structure which is a structure excellent in current collecting performance. On the other hand, as the support for the negative electrode, preferred is a perforated steel sheet prepared by subjecting iron foil inexpensive and excellent in conductivity to nickel plating.

The thickness of the conductive support is preferably 30 to 100 µm and more preferably 40 to 70 µm. When the thickness of the conductive support is less than 30 µm, the productivity may be decreased, and on the other hand, when the thickness of the conductive support exceeds 100 µm, the discharge capacity may become insufficient.

In the case where the conductive support is porous, the inner diameter is preferably 0.8 to 2 µm and more preferably 1 to 1.5 µm. When the inner diameter is less than 0.8 µm, the productivity may be decreased, and on the other hand, when the inner diameter exceeds 2 µm, the performance of retaining the hydrogen storage alloy may become insufficient.

Examples of the method for applying the paste for each electrode to the conductive support include roller coating with an applicator roll or the like, screen coating, blade coating, spin coating and bar coating.

Examples of the separator include a porous membrane, a nonwoven fabric and the like made of polyolefin resins such as polyethylene and polypropylene, acrylic, polyamide and the like.

The basis weight of the separator is preferably 40 to 100 g/m². When the basis weight is less than 40 g/m², short circuit and the decline in self discharge performance may be caused, and on the other hand, when the basis weight exceeds 100 g/m², the battery capacity tends to decrease since the proportion of the separator per unit volume increases. Moreover, the air permeability of the separator is preferably 1 to 50 cm/sec. When the air permeability is less than 1 cm/sec, the inner pressure of the battery may become too high, and on the other hand, when the air permeability exceeds 50 cm/sec, short circuit and the decline in self discharge performance may be caused. Furthermore, the average fiber diameter of the separator is preferably 1 to 20 µm. When the average fiber diameter is less than 1 µm, the strength of the separator decreases and the defect rate in the battery assembling process may be increased, and on the other hand, when the average fiber diameter exceeds 20 µm, short circuit and the decline in self discharge performance may be caused.

It is preferred that the separator have a fiber surface subjected to a hydrophilic treatment. Examples of the hydrophilic treatment include a sulfonation treatment, a corona treatment, a fluorine gas treatment, and a plasma treatment. Of these, the separator subjected to a sulfonation treatment on the fiber surface thereof is preferred because the separator has high ability to adsorb impurities such as NO₃⁻, NO₂⁻ and NH₃⁻ and elements eluted from the negative electrode that cause the shuttle phenomenon, and is highly effective in inhibiting the self discharge.

Examples of the alkaline electrolytic solution include an alkaline aqueous solution containing potassium hydroxide, sodium hydroxide, lithium hydroxide or the like. The alkaline electrolytic solution may be used alone or in combination of two or more thereof.

The concentration of the alkaline electrolytic solution is preferably not more than 9.0 M, and more preferably 5.0 to 8.0 M in terms of the total concentration of ions.

The alkaline electrolytic solution may contain various additive agents for enhancement in oxygen overpotential at the positive electrode, enhancement in corrosion resistance of the negative electrode, enhancement in self discharge and the like. Examples of such an additive agent include oxides and hydroxides of Y, Yb, Er, Ca, Zn and the like. These additive agents may be used alone or in combination of two or more thereof.

In the case where the nickel-metal hydride rechargeable battery according to the present invention is an open type nickel-metal hydride rechargeable battery, for example, the battery can be produced by superposing a negative electrode and a positive electrode with a separator interposed therebetween, injecting an alkaline electrolytic solution into the electrodes in the state of being fixed so that a predetermined pressure is applied, and putting them together into an open type cell.

On the other hand, in the case where the nickel-metal hydride rechargeable battery according to the present invention is a closed type nickel-metal hydride rechargeable battery, the battery can be produced by injecting an alkaline electrolytic solution before or after laminating a positive electrode, a separator and a negative electrode, and sealing them with a casing material. Moreover, in the closed type nickel-metal hydride rechargeable battery produced by winding a power generating element prepared by laminating a positive electrode and a negative electrode with a separator interposed therebetween, it is preferred that an alkaline electrolytic solution be injected into the power generating element before or after winding the power generating element. The method of injecting an alkaline electrolytic solution is not particularly limited, and the solution may be injected at atmospheric pressure, but vacuum impregnation method, pressurized impregnation method, centrifugal impregnation method and the like may be used. Moreover, examples of the casing material for the closed type nickel-metal hydride rechargeable battery include a material made of iron, plated iron prepared by subjecting iron to plating with metallic materials such as nickel, stainless steel, polyolefin resins and the like.

The form of the closed type nickel-metal hydride rechargeable battery is not particularly limited, and examples thereof include a battery provided with a positive electrode, a negative electrode and a single-layered or multi-layered separator such as a coin cell, a button cell, a prismatic cell and a flattened cell, and a cylindrical battery provided with a positive electrode, a negative electrode and a separator which are wound.

### Examples

The present invention will be described below in more detail with reference to examples, but the present invention is not limited to only these examples.

### [Hydrogen storage alloy according to first aspect of the present invention]

### <Preparation of Nickel-metal hydride rechargeable battery>

A nickel-metal hydride rechargeable battery was prepared by the method shown below.

### (1) Preparation of hydrogen storage alloy

### (Examples 1 to 5)

A predetermined amount of each of raw material ingots was weighed so as to allow the chemical composition of each alloy to be that listed in the following Table 1. To a melting pot, La and Al were placed, and then Ni and Y were placed. The contents were heated to 1500°C and allowed to melt with a high frequency melting furnace under an argon gas atmosphere and under reduced pressure, and furthermore MgNi₂ and Ca were placed and allowed to melt. After melting, the resulting molten alloy was rapidly cooled by applying a melt spinning method and allowed to solidify into an alloy at a rate of 1000°C/second. Next, after each of the resulting alloys was subjected to a heat treatment at 970°C for 5 hours under an argon gas atmosphere, each of them was ground to obtain a hydrogen storage alloy powder with an average particle diameter (D50) of 50 µm.

### (Comparative Examples 1 to 2)

The same procedure as in Examples 1 to 5 was carried out except that the heating temperature in the high frequency melting furnace was changed to 1550°C, whereby a hydrogen storage alloy powder was obtained.

### (2) Measurement of concentration distribution of Y

After the hydrogen storage alloy ingot was embedded in resin and fixed to obtain a lump of resin, the lump was polished with sandpaper and washed. In this connection, instead of the ingot, a powder or a bunch of nickel-metal hydride rechargeable battery electrodes may be used. Polishing was carried out so that the cross section passing through about the center of the alloy ingot or particle was exposed, and the cross section was subjected to a Pt-Pd coat treatment, after which the concentration analysis of Y was carried out within a range of 0.5 x 0.5 mm with an electron probe micro analyzer (available from Shimadzu Corp., model number 8705). The results are shown in the following Table 1. By comparing the intensity ratio, Y concentration and Ni concentration in the segregation phase relative to those of the main phase were calculated. Moreover, as the proportion of segregation phase of Y, the area ratio of the segregation phase which was precipitated and distributed throughout the main phase was calculated. Furthermore, by measuring the long side and the short side of the segregation phase and averaging them, the size of the segregation phase of Y was calculated.

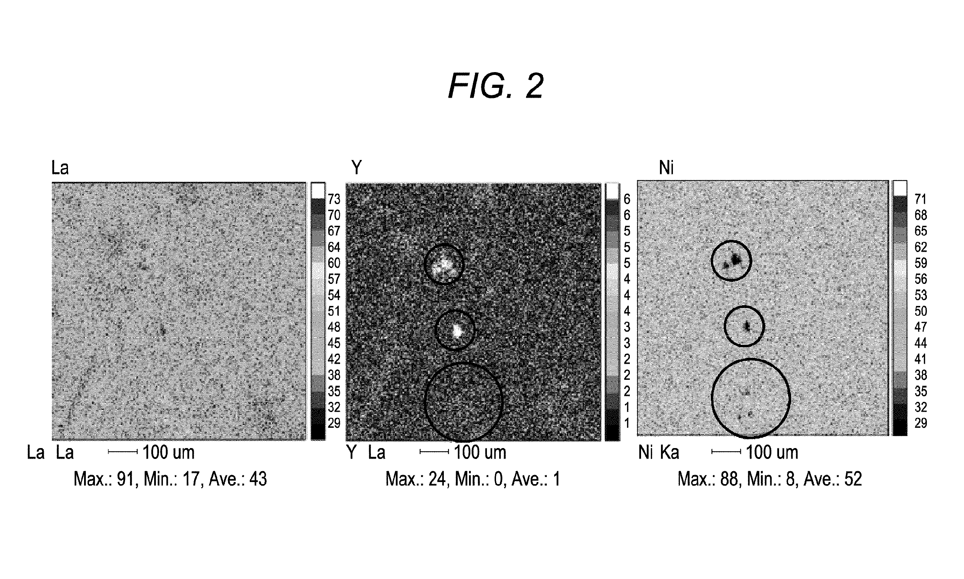

As shown in the following Table 1, the segregation of Y was confirmed in the case where the raw material ingots had been melted at 1500°C. It is assumed that since the melting temperature was below the melting point of Y, the homogenization did not sufficiently occur and the segregation phase precipitated. In this connection, Fig. 2 shows photographs showing the cross section of the hydrogen storage alloy ingot obtained in Example 1 and taken through an EPMA, and the segregation phase is distributed in the area circled.

### (3) Preparation of open type nickel-metal hydride rechargeable battery

To 100 parts by mass of the hydrogen storage alloy powder thus obtained, 5 parts by mass of a conductive agent (nickel powder) and an aqueous solution dissolving a thickening agent (methyl cellulose) were added, and furthermore, 1 part by mass of a binder (styrene-butadiene rubber) was added to make it into a paste form. The paste was applied to both sides of a perforated steel sheet (open area ratio of 50%) with a thickness of 35 µm and was dried, after which it was pressed into a thickness of 0.33 mm to prepare a negative electrode plate (500 mAh).

Moreover, as a positive electrode plate, a sintered nickel hydroxide electrode with a capacity that is three times the negative electrode capacity was used.

Furthermore, a negative electrode and a positive electrode were superposed with a separator interposed therebetween, and these electrodes were fixed so that a force of 1 N was applied thereto and injected with a 7 M aqueous potassium hydroxide solution to put them together into an open type cell.

### <Charge and discharge test>

A charge and discharge cycle in which the cell is charged for 15 hours at 0.1 ItA, and after an interval of 1 hour, discharged to -0.6 V relative to a Hg/HgO reference electrode at 0.2 ItA at 20°C was repeated 10 times. Afterward, a charge and discharge cycle in which the cell is charged for 45 minutes at 1 ItA, and after an interval of 15 minutes, discharged to -0.6 V relative to a Hg/HgO reference electrode at 0.5 ItA at 20°C was repeated 40 times.

### <Disassembly of battery and measurement of specific surface area value>

The negative electrode after the charge and discharge test was removed and washed with hot water at 100°C until the water became neutral. After drying, a specific surface area measuring apparatus (Monosorb available from Quantachrome Instruments, BET method) was used to determine the value of specific surface area. The results are shown in the following Table 1.

In this connection, in Table 1, "Difference between specific surface area values for each of ratios of B/A" means a difference between the specific surface area values based on the value of specific surface area of hydrogen storage alloy not containing Y among hydrogen storage alloys that have an approximately equal ratio of B/A, and it is represented by a negative value in the case where the value of specific surface area is smaller than that of the hydrogen storage alloy which serves as the standard, and is represented by a positive value in the case where the value of specific surface area is larger than that of the hydrogen storage alloy which serves as the standard.

**[Table 1]**

| | La | Y | Ca | Mg | Ni | Al | B/A | Specific surface area value after half cell test (m²/g) | Difference between specific surface area values for each of ratios of B/A | Segregation phase ofY | Y Concentration in Y segregation phase relative to that in main phase (times) | Ni Concentration in Y Segregation phase relative to that in main phase (times) | Proportion of Y segregation phase (%) | Size of Y segregation phase (µm) |
|---|---|---|---|---|---|---|---|---|---|---|---|---|---|---|
| Comparative Example 1 | 0.71 | 0.13 | - | 0.16 | 3.45 | 0.15 | 3.6 | 1.8 | 0.1 | Without | - | - | - | - |
| Example 1 | 0.71 | 0.13 | - | 0.16 | 3.45 | 0.15 | 3.6 | 1.6 | -0.1 | With | 6 times or more | 0.02 times or less | 0.7 | 15 |
| Example 2 | 0.71 | 0.2 | - | 0.16 | 3.45 | 0.15 | 3.6 | 1.6 | -0.1 | With | 6 times or more | 0.02 times or less | 0.5 | 15 |
| Example 3 | 0.7 | 0.19 | - | 0.11 | 3.26 | 0.16 | 3.42 | 1.1 | -0.3 | With | 4 times or more | 0.02 times or less | 0.5 | 15 |
| Comparative Example 2 | 0.6 | 0.1 | 0.1 | 0.2 | 3.3 | - | 3.3 | 2.1 | 0 | Without | - | - | - | - |
| Example 4 | 0.6 | 0.1 | 0.1 | 0.2 | 3.2 | 0.1 | 3.3 | 1.7 | -0.4 | With | 4 times or more | 0.02 times or less | 0.5 | 10 |
| Example 5 | 0.6 | 0.1 | 0.1 | 0.2 | 3.3 | - | 3.3 | 1.7 | -0.4 | With | 4 times or more | 0.02 times or less | 0.5 | 15 |

With regard to a hydrogen storage alloy, a hydroxide of the rare earth element and the like are formed on the surface thereof due to corrosion, and the shape thereof is deformed. Accordingly, by measuring the value of specific surface area, it is made possible to obtain an index for the amount of the hydrogen storage alloy corroded, and it can be said that the larger the value of specific surface area is, the larger the amount corroded is. It is found that the alloy with the segregation phase of Y has a small value of specific surface area compared to that with no segregation phase. It is thought that this is because when the hydrogen storage alloy is brought into contact with an alkaline solution, the segregated Y is preferentially allowed to elute and a film of yttrium hydroxide is promptly formed over the alloy surface. In this connection, it is presumed that with regard to such an effect of Y, the same holds true for heavy rare earth elements (Gd, Tb, Dy, Ho, Er, Tm, Yb, Lu) having an ionic radius and an atomic radius close to those of Y and having almost the same reaction order as that of Y

### [Hydrogen storage alloy according to second aspect of the present invention]

### <Preparation of Nickel-metal hydride rechargeable battery>

A nickel-metal hydride rechargeable battery was prepared by the method shown below.

### (1) Preparation of hydrogen storage alloy

### (Examples 6 to 10 and Comparative Examples 4 to 6)

A predetermined amount of each of raw material ingots was weighed so as to allow the chemical composition of each alloy to be that listed in the following Table 2. To a melting pot, La, Ce, Pr, Nd, Al and Mn were placed, and then Ni, Co and Y were placed. The contents were heated to 1500°C and allowed to melt with a high frequency melting furnace under an argon gas atmosphere and under reduced pressure. After melting, the resulting molten alloy was cooled at a rate of 50°C/second with a water-cooled mold, and allowed to solidify into an alloy. Next, after each of the resulting alloys was subjected to a heat treatment at 1000°C for 5 hours under an argon gas atmosphere, each of them was ground to obtain a hydrogen storage alloy powder with an average particle diameter (D50) of 50 µm. In this connection, an apparatus called MT3000 available from Microtrac Inc. was used to determine the average particle diameter.

### (Comparative Example 3)

The same procedure as in Examples 6 to 10 and Comparative Examples 4 to 6 was carried out except that the heating temperature in the high frequency melting furnace was changed to 1550°C, whereby a hydrogen storage alloy powder was obtained.

### (Reference Examples 1 and 2)

A predetermined amount of each of raw material ingots was weighed so as to allow the chemical composition of each alloy to be that listed in the following Table 2. To a melting pot, La and Al were placed, and then Ni and Y were placed. The contents were heated to 1500°C and allowed to melt with a high frequency melting furnace under an argon gas atmosphere and under reduced pressure, and furthermore MgNi₂ and Ca were placed and allowed to melt. After melting, the resulting molten alloy was rapidly cooled by applying a melt spinning method and allowed to solidify into an alloy at a rate of 1000°C/second. Next, after each of the resulting alloys was subjected to a heat treatment at 970°C for 5 hours under an argon gas atmosphere, each of them was ground to obtain a hydrogen storage alloy powder with an average particle diameter (D50) of 50 µm.

### (2) Measurement of concentration distribution of Y

After the hydrogen storage alloy ingot was embedded in resin and fixed to obtain a lump of resin, the lump was polished with sandpaper and washed. In this connection, instead of the ingot, a powder or a bunch of nickel-metal hydride rechargeable battery electrodes may be used. Polishing was carried out so that the cross section passing through about the center of the alloy ingot or particle was exposed, and the cross section was subjected to a Pt-Pd coat treatment, after which the concentration analysis of Y was carried out within a range of 0.5 x 0.5 mm with an electron probe micro analyzer (available from Shimadzu Corp., model number 8705). The results are shown in the following Table 2. By comparing the intensity ratio, Y concentration and Ni concentration in the segregation phase relative to those of the main phase were calculated. Moreover, as the proportion of segregation phase of Y, the area ratio of the segregation phase which was precipitated and distributed throughout the main phase was calculated. Furthermore, by measuring the long side and the short side of the segregation phase and averaging them, the size of the segregation phase of Y was calculated.

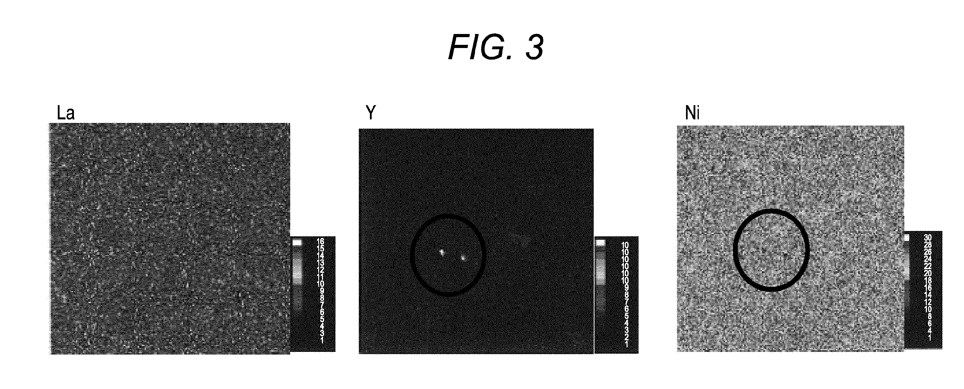

As shown in the following Table 2, the segregation of Y was confirmed in the case where the raw material ingots had been melted at 1500°C. It is assumed that since the melting temperature was below the melting point of Y, the homogenization did not sufficiently occur and the segregation phase precipitated. In this connection, Fig. 3 shows photographs showing the cross section of the hydrogen storage alloy ingot obtained in Example 6 and taken through an EPMA, and the segregation phase is distributed in the area circled.

### (3) Preparation of open type nickel-metal hydride rechargeable battery

To 100 parts by mass of the hydrogen storage alloy powder thus obtained, 5 parts by mass of a conductive agent (nickel powder) and an aqueous solution dissolving a thickening agent (methyl cellulose) were added, and furthermore, 1 part by mass of a binder (styrene-butadiene rubber) was added to make it into a paste form. The paste was applied to both sides of a perforated steel sheet (open area ratio of 50%) with a thickness of 35 µm and was dried, after which it was pressed into a thickness of 0.33 mm to prepare a negative electrode plate (500 mAh).

Moreover, as a positive electrode plate, a sintered nickel hydroxide electrode with a capacity that is three times the negative electrode capacity was used.

Furthermore, a negative electrode and a positive electrode were superposed with a separator interposed therebetween, and these electrodes were fixed so that a force of 1 N was applied thereto and injected with a 7 M aqueous potassium hydroxide solution to put them together into an open type cell.

### <Charge and discharge test>

A charge and discharge cycle in which the cell is charged for 15 hours at 0.1 ItA, and after an interval of 1 hour, discharged to -0.6 V relative to a Hg/HgO reference electrode at 0.2 ItA at 20°C was repeated 10 times. Afterward, a charge and discharge cycle in which the cell is charged for 45 minutes at 1 ItA, and after an interval of 15 minutes, discharged to -0.6 V relative to a Hg/HgO reference electrode at 0.5 ItA at 20°C was repeated 40 times.

### <Disassembly of battery and measurement of specific surface area value>

The negative electrode after the charge and discharge test was removed and washed with hot water at 100°C until the water became neutral. After drying, a specific surface area measuring apparatus (Monosorb available from Quantachrome Instruments, BET method) was used to determine the value of specific surface area. The results are shown in the following Table 2.

In this connection, in Table 2, "Difference between specific surface area values for each of ratios of B/A" means a difference between the specific surface area values based on the value of specific surface area of hydrogen storage alloy not containing Y among hydrogen storage alloys that have an approximately equal ratio of B/A, and it is represented by a negative value in the case where the value of specific surface area is smaller than that of the hydrogen storage alloy which serves as the standard, and is represented by a positive value in the case where the value of specific surface area is larger than that of the hydrogen storage alloy which serves as the standard. Moreover, in Table 2, the column of "Difference between specific surface area values for each of ratios of B/A" left blank means that the difference is unmeasured.

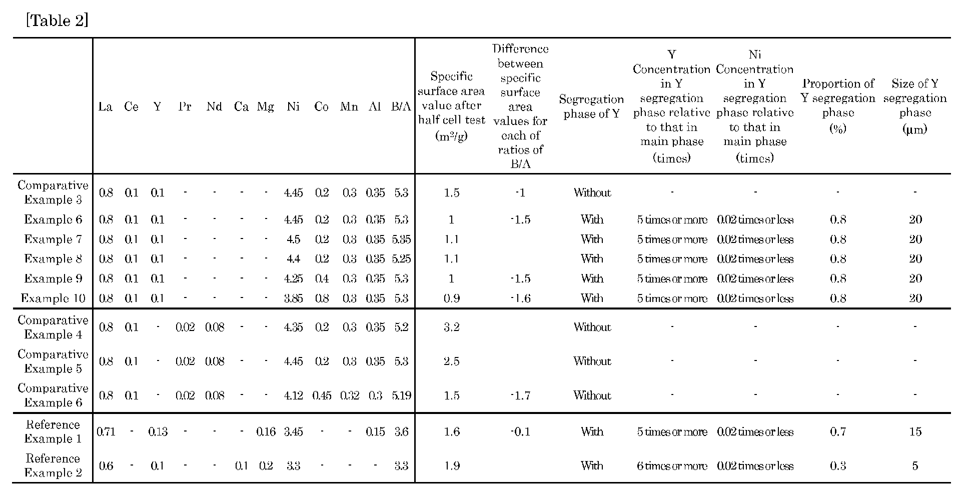

With regard to a hydrogen storage alloy, a hydroxide of the rare earth element and the like are formed on the surface thereof due to corrosion, and the shape thereof is deformed. Accordingly, by measuring the value of specific surface area, it is made possible to obtain an index for the amount of the hydrogen storage alloy corroded, and it can be said that the larger the value of specific surface area is, the larger the amount corroded is. It is found that the alloy with the segregation phase of Y has a small value of specific surface area compared to that with no segregation phase. It is thought that this is because when the hydrogen storage alloy is brought into contact with an alkaline solution, the segregated Y is preferentially allowed to elute and a film of yttrium hydroxide is promptly formed over the alloy surface. When the ratio of B/A is 5.25 to 5.35, an especially great effect was observed. Moreover, it was found that even when the amount of Co is small, namely, the ratio of Co/A is 0.2, corrosion resistance is enhanced by adding Y. In this connection, it is presumed that with regard to such an effect of Y, the same holds true for heavy rare earth elements (Gd, Tb, Dy, Ho, Er, Tm, Yb, Lu) having an ionic radius and an atomic radius close to those of Y and having almost the same reaction order as that of Y

According to the present invention, corrosion resistance of the hydrogen storage alloy can be dramatically enhanced and a long life nickel-metal hydride rechargeable battery can be obtained, since the present invention has the above-mentioned configuration.

## Claims

1. A hydrogen storage alloy with at least two phases containing La, Ni, and Y or a heavy rare earth element, comprising:
a first phase having a composition represented by the general formula R1ₐR2_{b}R3_{c}Ni_{d}R4ₑ (wherein R1 is at least one element essentially containing La, R2 is at least one element selected from the group consisting of Y and the heavy rare earth element, R3 is Ca and/or Mg, R4 is at least one element selected from the group consisting of Co, Mn and Al, and a, b, c, d and e are numerical values that satisfy the numerical expressions a + b + c = 1, 0 ≤ b ≤ 0.3, 0 ≤ c ≤ 0.4, 3.0 < d + e < 4.0, and 0 ≤ e ≤ 1); and
a second phase having a higher concentration ofY or the heavy rare earth element than that of the first phase, and is dispersed in the first phase.

2. The hydrogen storage alloy according to claim 1, wherein the concentration of Ni in the second phase is not more than 0.02 times the concentration of Ni in the first phase.

3. A hydrogen storage alloy with at least two phases containing La, Ni, and Y or a heavy rare earth element, comprising:
a first phase having a composition represented by the general formula R1ₐR2_{b}Ni_{c}Co_{d}R3ₑ (wherein R1 is La and at least one element selected from the group consisting of a rare earth element exclusive of Y and the heavy rare earth element, Mg, Ca and Zr, R2 is at least one element selected from the group consisting of Y and the heavy rare earth element, R3 is at least one element selected from the group consisting of Mn, Al, Zn, Fe, Cu and Si, and a, b, c, d and e are numerical values that satisfy the numerical expressions 0 < b < 0.3, a + b = 1, 5.15 < c + d + e < 5.45, 0 ≤ d ≤ 1, and 0 ≤ e ≤ 1); and
a second phase having a higher concentration of Y or the heavy rare earth element than that of the first phase and a concentration of Ni being not more than 0.02 times the concentration of Ni in the first phase, and is dispersed in the first phase.

4. The hydrogen storage alloy according to claim 3, wherein, in the general formula, R1 is La and Ce, R3 is Mn and/or Al, and c, d and e satisfy the numerical expressions 5.20 < c + d + e < 5.45 and 0 ≤ d ≤ 0.45.

5. An electrode, comprising the hydrogen storage alloy according to any one of claims 1 to 4.

6. A nickel-metal hydride rechargeable battery, comprising the electrode according to claim 5 as a negative electrode.

7. A method for producing the hydrogen storing alloy according to any one of claims 1 to 4, comprising the steps of:
allowing raw material metals to melt below the melting point temperature of Y or the heavy rare earth element employing a high frequency induction melting method to alloy the metals;
cooling the resulting molten alloy; and
subjecting the cooled alloy to a heat treatment at 900 to 1080°C.
